# EUROPEAN PATENT APPLICATION

(11) **EP 2 175 123 A2**
(43) Date of publication of application: **14.04.2010**
(21) Application number: 09252401.6
(22) Date of filing: 12.10.2009
(51) Int. Cl.: F02K 1/76, F02K 1/70, F16H 25/20, F16H 25/24

(54) **Actuator and corresponding thrust reverser system**

(30) Priority: 13.10.2008 GB 0818701
(71) Applicant: Goodrich Actuation Systems Ltd., Solihull West Midlands B90 4LA (GB)
(72) Inventor: Somerfield, Michael Paul, Stoke on Trent ST7 2LG (GB); Harvey, John Herbert, West Midlands WV6 7SJ (GB)
(74) Representative: Bailey, Richard Alan

(57) **Abstract**

An actuator for a thrust reverser system comprises a screw shaft (20), a nut (32) translatable along the screw shaft (20) upon relative rotation occurring therebetween, and articulated connection means (38) securing an output member (34) to the nut (32), the output member (34) being of elongate form and extending substantially parallel to the screw shaft (20) when the actuator is in a retracted position.

## Description

This invention relates to an actuator, and in particular to an actuator suitable for use in aerospace applications for driving a movable component between a retracted or stowed position and an extended or deployed position.

One application in which actuators are used is in driving the thrust reverser cowls of a thrust reverser system for an aircraft gas turbine engine between stowed and deployed positions. In such an arrangement, a series of actuators, typically in the form of ball or roller screw actuators, are secured to a fixed forward support structure. Each actuator has an output member in the form of a tail tube, an end part of which is secured to the thrust reverser cowl to be moved. A fixed aft cascade ring is provided on the engine, the aft cascade ring being fixed against axial movement and having openings or passages formed therein through which the actuator tail tubes extend. Such an arrangement is described in US 6170254.

It is becoming increasingly common for reasons of lightness and strength for the aft cascade ring to be manufactured from composite materials particularly carbon-fibre composite, rather than aluminium or other metallic materials as has traditionally been used. Although the aft cascade rings manufactured from composite materials are designed to be of sufficient strength to withstand the loadings applied thereto, in use, it has been found that they tend to expand radially outwards when the engine speed is increased after deployment of the thrust reverser cowls to reduce the aircraft speed on landing. The openings or passages formed in the aft cascade ring cannot be made large enough to accommodate such expansion without undesirably increasing the overall size or weakening the structure of the aft cascade ring, and as a result it has been found that the expansion may result in side-loading of the actuator causing additional stresses to be placed upon parts of the actuator, for example the screw shaft, tail tube and ball or roller screw coupling therebetween. These additional stresses may result in increased wear, and so may adversely affect the operating life of the actuator.

A number of actuators including articulated outputs are known. For example, US 4625758, US 4023432, JP 2005223983 and GB 2190441 describe such actuators for use in a range of applications.

It is an object of the invention to provide an actuator in which the disadvantages described hereinbefore are overcome or are of reduced effect.

According to the present invention there is provided an actuator comprising a screw shaft, a nut translatable along the screw shaft upon relative rotation occurring therebetween, and articulated connection means securing an output member to the nut, the output member being of elongate form and extending substantially parallel to or coaxially with the screw shaft when the actuator is in a retracted position.

When used in a thrust reverser system as outlined hereinbefore, the articulated connection means will be positioned close to the aft cascade ring when the actuator is extended, articulation of the articulated connection means accommodating expansion of the aft cascade ring without resulting in the application of significant additional stresses to the actuator.

The output member is preferably of tubular form, encircling at least part of the screw shaft when the actuator is in a retracted position.

The screw shaft is preferably mounted for rotation relative to a housing, the housing preferably incorporating pivotal mounting means to permit the pivotal mounting thereof to a forward support structure, in use.

The articulated connection means preferably comprises a pivotal connection, for example in the form of one or more pivot pins interconnecting the nut and output member.

The invention further relates to a thrust reverser system comprising a movable cowl and an actuator as described hereinbefore operable to drive the cowl for movement, the output member of the actuator passing through an opening provided in a support, the articulated connection means being located adjacent the support when the actuator occupies an extended position.

The support preferably comprises an aft cascade ring.

The invention will further be described, by way of example, with reference to the accompanying drawings, in which:
Figure 1 is a diagrammatic view illustrating part of an aircraft engine with a thrust reverser system incorporating an actuator in accordance with an embodiment of the invention.
Figure 2 is a view illustrating part of the system of Figure 1;
Figure 3 is a sectional view illustrating the actuator in greater detail; and
Figure 4 illustrates the operation of the invention.

Referring to the accompanying drawings there is illustrated an aircraft engine 10 incorporating a thrust reverser system 12. The thrust reverser system 12 includes a pair of movable thrust reverser cowls 14 (only one of which is shown), each being movable between a stowed position and a deployed position by an actuator arrangement 16. The actuator arrangement 16 comprises, in this case, three linear actuators 18, each comprising a rotatable screw shaft 20 supported through bearings 22 for rotation relative to a housing 24. The bearings 22 are adapted to resist or limit axial movement of the screw shaft 20. The housing 24 of one of the actuators 18 includes an electrically driven motor and gear arrangement (not shown), drive shafts 26 transmitting drive to the others of the actuators 18 to drive the screw shafts 20 for rotation, when desired. However, arrangements are possible in which each actuator incorporates its own motor, synchronisation shafts optionally being provided to ensure that the actuators are operated in synchronism at the same speed, in use.

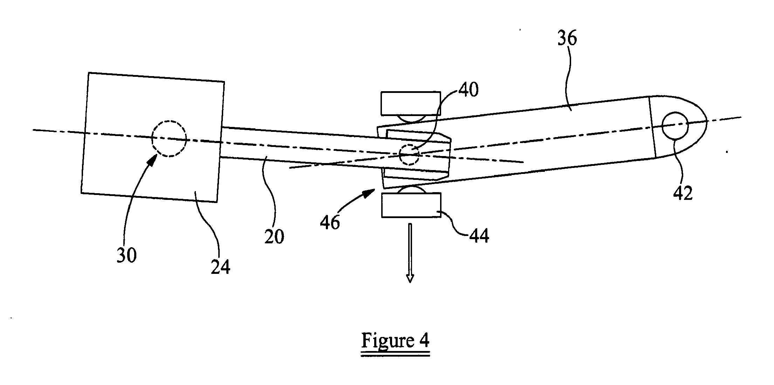

The housings 24 are mounted, as shown diagrammatically in Figure 4, by a pivotal mounting arrangement 30 to a forward support structure 28 of the engine 10.

A nut 32 co-operates with the screw shaft 20 via a ball or roller screw type coupling. The nut 32 is fixed against rotation, and it will be appreciated that rotation of the screw shaft 20 drives the nut 32 for translating movement along the screw shaft 20. The nut 32 is coupled to an output member 34 in the form of an elongate, hollow tail tube 36 by an articulated connection means 38 in the form of a pivotal connection. The tail tube 36 lies substantially parallel to or coaxial with the screw shaft 20, encircling part thereof when the actuator occupies a retracted position. The articulated connection means 38 comprises a pair of pivot pins 40 mounted upon the nut 32, on opposite sides thereof, and received within corresponding openings provided in the tail tube 36. The nut 32 and the overlying region of the tail tube 36 are sized and profiled such that limited relative articulation may be accommodated in use. The tail tube 36 is provided, at its end remote from the housing 24, with a pivotal mounting 42 whereby it is pivotally secured to the cowl 14 but fixed against rotation.

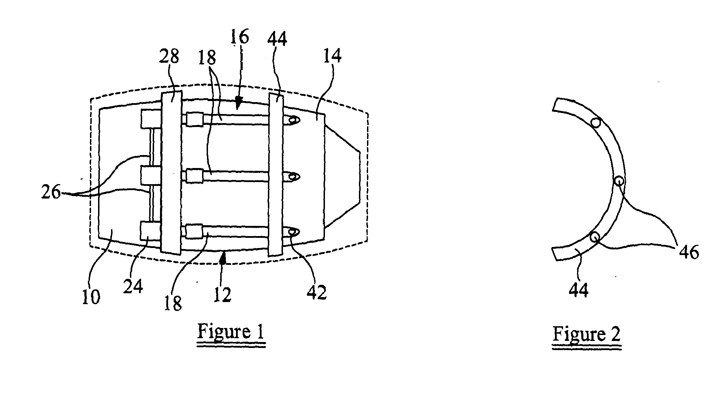

The engine 10 includes a support in the form of an aft cascade ring 44 (only part of which is shown in Figure 2) including openings or passages 46 through which the tail tubes 36 of the actuators 18 extend.

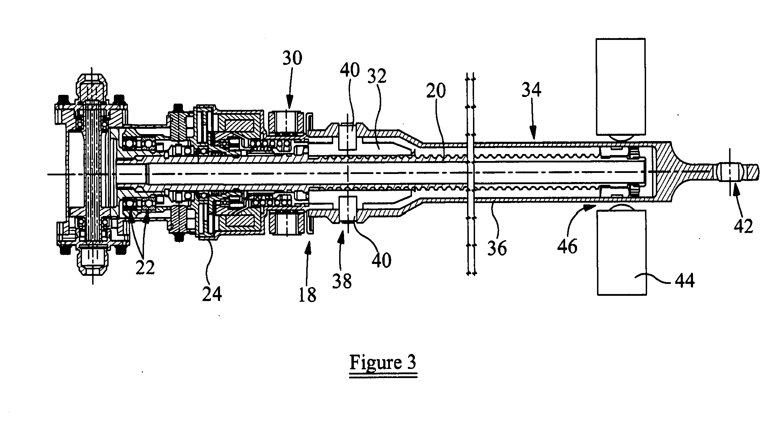

In use, starting from the position shown in Figure 3 in which each actuator 18 occupies a retracted position and the thrust reverser cowl 14 is stowed, when it is desired to deploy the thrust reverser the actuators 18 are each extended. This is achieved by driving the screw shafts 20 thereof for rotation, causing translation of the nuts 32 toward the position illustrated in Figure 4. The movement of the nuts 32 is transmitted to the tail tubes 36, and thus to the cowl 14, moving the cowl to its deployed position.

As mentioned hereinbefore, when the thrust reverser system is deployed, not only is the thrust reverser cowl 14 moved, but also the engine operating speed is increased, and as a result the aft cascade ring 44 expands. The degree of expansion is significant, for example in some arrangements the aft cascade ring 44 expands radially outwards by as much as around 15mm. In prior arrangements, such expansion has resulted in reduced service life due to the stresses being placed upon parts of the actuators, for example in bending of the screw shafts thereof. However, in accordance with the invention, such expansion of the aft cascade ring 44 is accommodated by articulation of the actuator 18 about the pivot pins 40 as shown (greatly exaggerated) in Figure 4, in combination with the pivotal mountings 30, 42 of the housing 24 and tail tube 36. To accommodate the expansion in this manner, it will be appreciated that it is important for the axis of pivotal movement accommodated by the articulated connection means to be properly orientated so as to be generally tangential to the adjacent part of the aft cascade ring 44. By accommodating such expansion in this manner, it will be appreciated that the expansion of the aft cascade ring 44 does not result in significant additional loadings being placed upon the actuators 18, thus wear is reduced and the operating life thereof can be increased. In particular, side-loading or bending of the screw shaft 20 is avoided, and the application of additional loadings to the ball or roller screw couplings is avoided. It will be appreciated that, in most instances, the length of actuators 18 will be of the order of 1 metre and therefore the articulation required to accommodate the radial expansion of the aft cascade ring 44 will be less than 5°, typically only 1° or 2°.

It will be appreciated that subsequent contraction of the aft cascade ring 44 is accommodated in a similar manner, and that movement of the cowl 14 to its stowed position is achieved by driving the actuators 18 in the reverse direction. Once stowed, it will be appreciated that articulation of the tail tube 36 relative to the nut 32 is limited by virtue of the long length of the screw shaft 20 then located within the tail tube 36.

As illustrated, it is desirable for the openings 46 in the aft cascade ring 44 to be shaped or profiled so as to accommodate the pivoting or tilting movement of the tail tube 36 relative to the aft cascade ring 44.

Although one specific type of actuator is described and illustrated herein, it will be appreciated that the invention is applicable to a number of other actuator designs, and that a wide range of modifications and alterations may be made to the arrangement described herein without departing from the scope of the invention.

## Claims

1. An actuator comprising a screw shaft (20), a nut (32) translatable along the screw shaft (20) upon relative rotation occurring therebetween, and articulated connection means (38) securing an output member (34) to the nut (32), the output member (34) being of elongate form and extending substantially parallel to or coaxially with the screw shaft (20) when the actuator is in a retracted position.

2. An actuator according to Claim 1, wherein the output member (34) is of tubular form and encircles at least part of the screw shaft (20) when the actuator is in a retracted position.

3. An actuator according to Claim 1 or Claim 2, wherein the screw shaft (20) is mounted for rotation relative to a housing (24), the housing (24) incorporating pivotal mounting means (30) to permit the pivotal mounting thereof to a support structure, in use.

4. An actuator according to any of Claims 1 to 3, wherein the output member (34) comprises an elongate tail tube (36) incorporating pivotal mounting means (42) to permit the pivotal connection thereof to a thrust reverser cowl (14), in use.

5. An actuator according to any of the preceding claims, wherein the articulated connection means (38) comprises a pivotal connection.

6. An actuator according to Claim 5, wherein the pivotal connection includes one or more pivot pins (40) interconnecting the nut (32) and output member (34).

7. A thrust reverser system comprising a movable cowl (14) and an actuator (18) as claimed in any of the preceding claims and operable to drive the cowl (14) for movement, the output member (34) of the actuator (18) passing through an opening (46) provided in a support (44).

8. A system according to Claim 7, wherein the articulated connection means (38) is located adjacent the support (44) when the actuator (18) occupies an extended position.

9. A system according to Claim 7 or Claim 8, wherein the articulated connection means (38) is adapted to articulate about an axis substantially tangential to an adjacent part of the support (44), in use.
